## Europäisches Patentamt

## European Patent Office

## Office européen des brevets

(19)

(11) Numéro de publication: **0 107 566**

**B1**

(12) **FASCICULE DE BREVET EUROPÉEN**

(45) Date de publication du fascicule du brevet:
**13.08.86**

(21) Numéro de dépôt: **83401964.8**

(22) Date de dépôt: **07.10.83**

(51) Int. Cl.⁴: **C 03 B 29/04,** C 03 B 23/025

(54) **Procédé pour la transport de feuilles de verre portées à leur température de déformation et dispositif pour sa mise en oeuvre.**

(30) Priorité: **11.10.82 FR 8216969**

(43) Date de publication de la demande:
**02.05.84 Bulletin 84/18**

(45) Mention de la délivrance du brevet:
**13.08.86 Bulletin 86/33**

(84) Etats contractants désignés:
**AT BE CH DE FR GB IT LI LU NL SE**

(56) Documents cité:
**CA-A-859 647**
**DE-A-2 741 098**
**FR-A-1 454 707**
**FR-A-2 312 463**
**FR-A-2 342 947**
**US-A-3 084 526**
**US-A-3 123 344**
**US-A-3 809 542**

(73) Titulaire: **SAINT- GOBAIN VITRAGE, Les Miroirs 18, avenue d'Alsace, F-92400 Courbevoie (FR)**
(84) Etats contractants désignés:
**BE CH FR GB IT LI LU NL SE AT**

(73) Titulaire: **VEGLA Vereinigte Glaswerke GmbH, Viktoriaallee 3-5, D-5100 Aachen (DE)**
(84) Etats contractants désignés: **DE**

(72) Inventeur: **Blank, Kurt, Haselsteig 13, D-5100 Aachen (DE)**
Inventeur: **Halberschmidt, Friedrich, Christian- Derichstrasse 16, D-5120 Herzogenrath (DE)**
Inventeur: **Reinmold, Heinz- Josef, Schervierstrasse 6, D-5100 Aachen (DE)**
Inventeur: **Audi, Josef, Kronenberg 61, D-5100 Aachen (DE)**
Inventeur: **Kaesmacher, Jakob, Peitschenweg 27, D-5190 Stolberg (DE)**
Inventeur: **Reinicke, Ralf, Ohmstrasse 84, D-5000 Köln (DE)**
Inventeur: **Niedenhoff, Udo, Bartholomäus Strasse 5a, D-5000 Köln (DE)**

(74) Mandataire: **Leconte, Jean- Gérard, Saint- Gobain Recherche 39, Quai Lucien Lefranc, F-93304 Aubervilliers Cedex (FR)**

## Description

L'invention a trait au transport de volumes de verre en position horizontale, sur des rouleaux tournants échelonnés à travers un four de réchauffage dans lequel ces volumes sont portés à leur température de déformation, l'emploi d'un courant gazeux à haute température dirigé sur leurs faces inférieures permettant de réduire la réaction des rouleaux.

Pour les bomber ou les tremper thermiquement en vue de fabriquer notamment des vitrages de sécurité pour des véhicules, il faut réchauffer les feuilles de verre jusqu'à leur température de déformation.

Il est connu par le brevet français FR-A-1 176 617 (ou son correspondant US-A-3 084 526) de disposer chaque volume de verre à bomber sur un moule squelette et d'acheminer le moule ainsi chargé au travers d'un four de bombage. Pour pouvoir obtenir des formes bombées complexes, on chauffe plus fortement certaines zones du volume de verre par des dispositifs de chauffage, montés sur le moule lui-même. Mais cela peut entraîner un affaissement trop rapide du verre à certains endroits; c'est pourquoi on prévoit des jets pour souffler de l'air froid sur le verre à des instants précis, afin de le refroidir localement et d'enrayer ainsi l'affaissement indésiré.

Cette solution employée dans le cas de surchauffes locales appliquées au verre, envisagée lorsque le verre est immobile sur un moule squelette, n'est plus possible, ni même utile lorsque les volumes de verre sont acheminés à travers le four sur des rouleaux de transport cylindriques, ou s'il s'agit de fabriquer des vitrages bombés, sur un lit de rouleaux de transport cintrés à la forme désirée, entourés de gaines tubulaires flexibles, rigides en rotation, qui sont entraînées en rotation sur elles-mêmes (de tels dispositifs de bombage et/ou de transport de volumes de verre bombés sont décrits par exemple dans les brevets français FR-A-1 476 785 et FR-A-2 312 463).

Par contre, dans le cas du transport des volumes de verre directement sur des rouleaux cylindriques ou cintrés, de petites déformations indésirées desdits volumes de verre peuvent se produire dans la zone chaude du four, du fait qu'ils ne sont pas supportés de façon uniforme sur toute leur surface. Pour y remédier, il est connu de diriger du bas vers les feuilles de verre, entre les rouleaux de transport, un courant de gaz à température élevée (CA-A-859 647, DE-A-2 741 098). La pression du gaz a pour objet d'équilibrer une partie du poids, dans une mesure telle que la charge complémentaire à supporter par les rouleaux suffise pour engendrer les forces de frottement nécessaires au transport.

Dans les procédés connus de ce type, la pression que le gaz exerce sous la feuille de verre transversalement à la direction de transport est maintenue constante sur la largeur du dispositif afin de supporter cette feuille de façon uniforme sur toute sa largeur.

L'invention consiste au contraire à diriger vers elle un courant de gaz à température élevée possédant, dans sa direction, une vitesse d'écoulement qui varie continuement sur la largeur; les gaz posséderont donc avantageusement un débit d'émission moyen par unité de surface non uniforme sur la largeur. La distance d'émission sera suffisante, de préférence comprise entre 5 et 20 cm, pour que la pression exercée sous la feuille varie continuement.

La variation de vitesse d'écoulement du gaz ainsi créée selon l'invention dans les espaces qui séparent les rouleaux de transport engendre sur la feuille de verre, de façon correspondante, une pression dynamique qui varie continuement, et compense donc le poids de cette dernière dans une plus large mesure le long de certaines plages qui s'étendent dans la direction de transport qu'à l'intérieur d'autres plages parallèles. On peut alors, par exemple, supporter plus fortement la feuille de verre dans les domaines qui exigent une qualité optique particulièrement bonne, et limiter aux autres régions les forces de frottement nécessaires au transport; ainsi peut-on éventuellement soulager leur région centrale plus que les régions latérales qui, une fois le vitrage posé, se trouvent en partie recouvertes par son cadre.

Selon un développement de l'invention et quand on l'utilise à l'intérieur de la zone de bombage d'un four, le ou les filets de courant fournissant un débit moyen plus faible par unité de surface sont dirigés vers les régions de la feuille de verre qui s'affaissent sous l'effet de leur propre poids au-dessus des parties les plus basses des rouleaux de transport. On peut ainsi, par un profil de pression déterminé, aider et accélérer le processus de bombage sans que les forces de bombage exercées par le courant gazeux provoquent sur les volumes des concentrations d'efforts nuisibles. Selon l'épaisseur, la température et la forme de la feuille de verre, l'écart de pression dynamique pourra avantageusement aller de 20 à 300 Pa.

D'autres avantages et particularités de l'invention apparaissent dans la description ci-dessous d'exemples de mise en oeuvre décrits en référence aux dessins. Ces dessins montrent:
- figure 1, une coupe transversale en élévation de la zone de bombage d'un four de bombage selon l'invention équipé d'un lit concave de rouleaux,
- figure 1a, le profil de pression dynamique dans la zone de bombage représentée figure 1,
figure 2, une coupe verticale en élévation de la zone de bombage d'un four de bombage selon l'invention équipé d'un lit convexe de rouleaux,
- figure 2a, le profil de pression dynamique donné par le dispositif de la figure 2, et qui agit sur la face inférieure du verre,
- figure 3, une coupe verticale en élévation de la zone de bombage d'un four de bombage analogue, possédant des conduites auxiliaires de gaz chaud pour agir partiellement sur les faces supérieures des feuilles de verre,
- figure 4, une coupe verticale en élévation de la zone de bombage d'un four de bombage montrant son système de recirculation des gaz porteurs.

Le procédé de l'invention sera décrit dans le cadre de la zone de bombage d'un four de bombage horizontal à rouleaux, quoique l'invention puisse aussi s'appliquer de façon avantageuse dans la zone à haute température d'un four horizontal à rouleaux cylindriques offrant un lit plan.

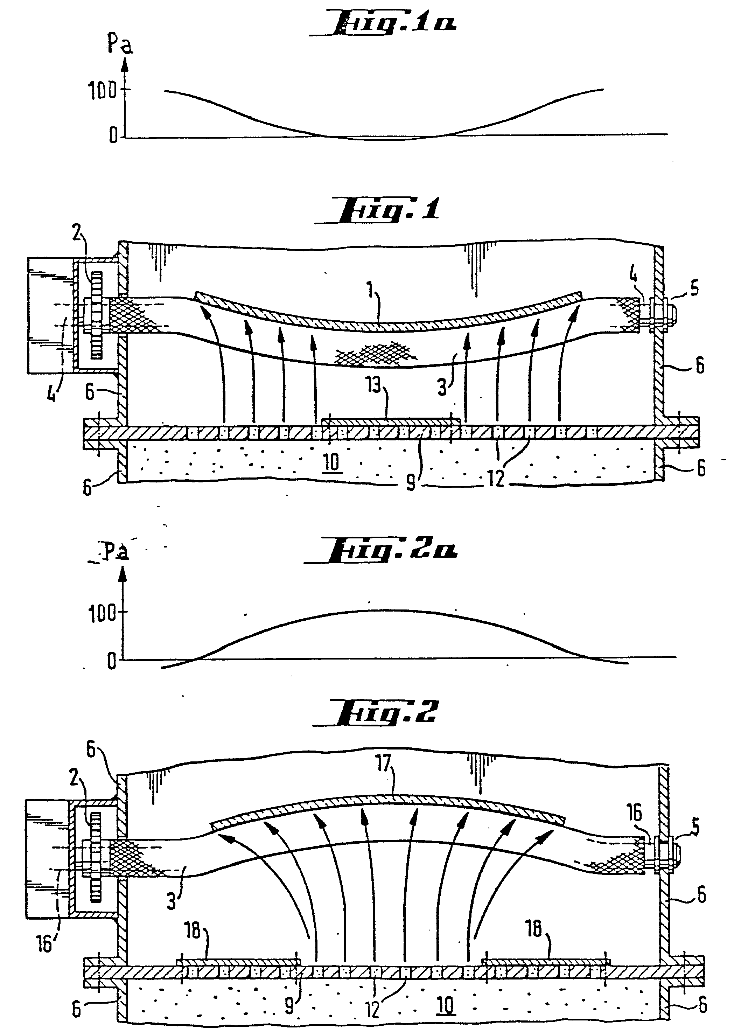

Dans la disposition présentée sur la figure 1, les volumes de verre 1 sont acheminés à travers la zone de bombage du four sur des rouleaux possédant, entraînées en rotation par des pignons dentés 2, des gaines de transport 3 flexibles mais rigides en torsion. Les gaines de transport 3 reposent, tournantes, sur des arbres porteurs circulaires 4 cintrés d'une façon correspondant à la courbure désirée et supportés dans des paliers 5 le long des parois latérales 6 du four.

Sur toute la largeur du four et à 15 cm de distance environ sous les paliers 5 est disposée une plaque métallique perforée 9, qui forme la platine supérieure d'une chambre 10 alimentée en air sous pression réchauffé à une température de l'ordre de 650 °C. Cette plaque pourrait porter un réseau de perforations réparti selon une densité variable par l'intermédiaire du nombre, de la section, de la disposition et/ou du degré de fermeture des trous. Dans l'exemple représenté, il s'agit toutefois d'une plaque perforée de façon uniforme mais dont les trous seront fermés dans sa plage médiane par une plaque métallique de recouvrement 13, pour qu'il n'en sorte pas d'air. Les trous 12 pratiqués dans la surface de la plaque 9 ont un diamètre de 14 mm et sont percés à un entr'axe de 30 mm; la largeur de la plaque 13 correspond sensiblement au tiers de celle du volume 1. La pression à l'intérieur de la chambre 10 est de l'ordre de 250 Pa (25 mm de colonne d'eau).

Au-dessus de la plaque perforée 9, les filets d'air émis par les divers trous commencent à interférer et à se mélanger de sorte que le courant d'air qui atteint la face inférieure de la feuille de verre 1 possède le profil de vitesse à variation continue, exempt de pointes de pression, que l'on désire, ce qui établit sous la feuille de verre une pression dynamique dont le profil est représenté sur la figure 1a: le long des bords latéraux du volume 1, la pression est de l'ordre de 100 Pa et, dans la zone médiane, il se produit une légère dépression, ce qui s'explique par un léger effet d'aspiration des gaz qui s'écoulent latéralement. Cette répartition de pression intervient sur le processus de bombage et renforce les forces de bombage dans le sens désiré. Elle conduit, en même temps, à compenser le poids de façon voulue, ceci non seulement dans les régions latérales mais aussi dans la région médiane mise en légère dépression, car les forces qui soulèvent la feuille sur les cotés se transmettent à l'intérieur de celle-ci jusque dans cette région médiane.

La pression dans la chambre 10 est réglée en fonction de la pression dynamique désirée sous la feuille: une pression uniforme de 100 Pa sur l'ensemble de sa surface équilibre le poids d'une feuille épaisse de 4 mm: dans la disposition décrite, la pression exercée compense la moitié du poids d'un tel volume, ce qui améliore de façon appréciable la qualité optique du vitrage bombé. Si l'on veut bomber des volumes plus minces, on réduira de façon correspondante la pression d'alimentation dans la chambre 10; inversement, on l'augmentera pour des volumes plus épais.

Si l'on veut soulager les rouleaux essentiellement dans la zone médiane du volume, on peut utiliser la forme d'exécution de la zone de bombage représentée sur la figure 2. Pour l'ensemble, la structure du four dans la région de la zone de bombage est la même que dans le cas de la figure 1. Toutefois, à la différence de celui décrit ci-dessus, ses rouleaux possèdent des arbres porteurs (16) cintrés vers le haut; lors du bombage des volumes 17, ce sont les régions latérales qui s'affaissent par rapport à la région médiane sous l'effet de leur propre poids.

Au dessus de la chambre sous pression 10 est de nouveau placée une plaque perforée 9, dont les trous 12 ont la même disposition et qui se trouve à une distance des feuilles de verre qui atteint 15 cm dans la zone médiane; mais, dans le cas actuel, chacune des deux plages latérales est recouverte par une plaque métallique 18 de façon à boucher les trous qui s'y trouvent, sur une largeur voisine du tiers de la largeur des volumes 17, de sorte que la largeur de la plage non recouverte de la plaque perforée 9, par laquelle s'écoule l'air à température élevée, est elle aussi de l'ordre du tiers de la largeur de ces volumes.

Une pression d'alimentation de 200 Pa dans la chambre 10 crée sous la région centrale de la feuille de verre 17 une pression dynamique de l'ordre de 100 Pa, qui décroit progressivement vers les cotés pour atteindre des valeurs légèrement négatives au voisinage des bords. Le profil de pression obtenu dans ce cas est représenté sur la figure 2a. La dépression observée le long des bords s'explique encore par l'aspiration que l'écoulement des gaz crée autour de la feuille de verre; cet effet intervient à nouveau sur le processus de bombage.

Dans la direction de transport, la zone de bombage du four peut être divisée en plusieurs secteurs dans lesquels existent des courants gazeux distincts réglés séparément. On pourrait ainsi, si cela s'avérait nécessaire, régler aussi au mieux la vitesse d'écoulement et/ou la section d'émission des courants gazeux sur la longueur du four au fur et à mesure que la feuille se ramollit ou s'incurve.

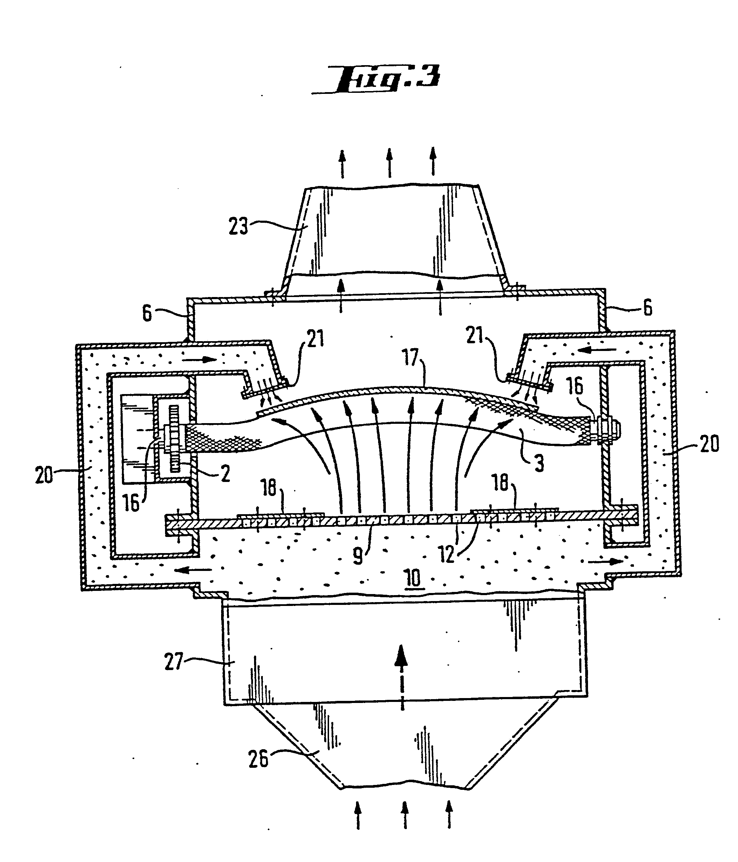

Le dispositif représenté par la figure 3 apporte un développement supplémentaire au processus de bombage; dans ce cas, le volume 17 est encore bombé sur un lit convexe puisque les arbres porteurs 16 sont cintrés vers le haut. La plaque perforée 9 placée au-dessus de la chambre 10 est de nouveau masquée sur les deux cotés par des plaques métalliques 18, de sorte que le courant gazeux dirigé du bas vers la feuille de verre recouvre sensiblement la partie médiane de cette dernière.

Des courants gazeux auxiliaires dirigés du haut vers les régions latérales du volume 17 contribuent à les faire s'affaisser. A cette fin, des conduites 20, reliées à la chambre sous pression 10, sont disposées le long des parois 6 et traversent ces parois pour pénétrer au-dessus du convoyeur, leurs buses de sortie 21 dirigeant l'air à peu près verticalement vers les régions latérales de la feuille de verre. Une hotte 23 évacue l'air chaud.

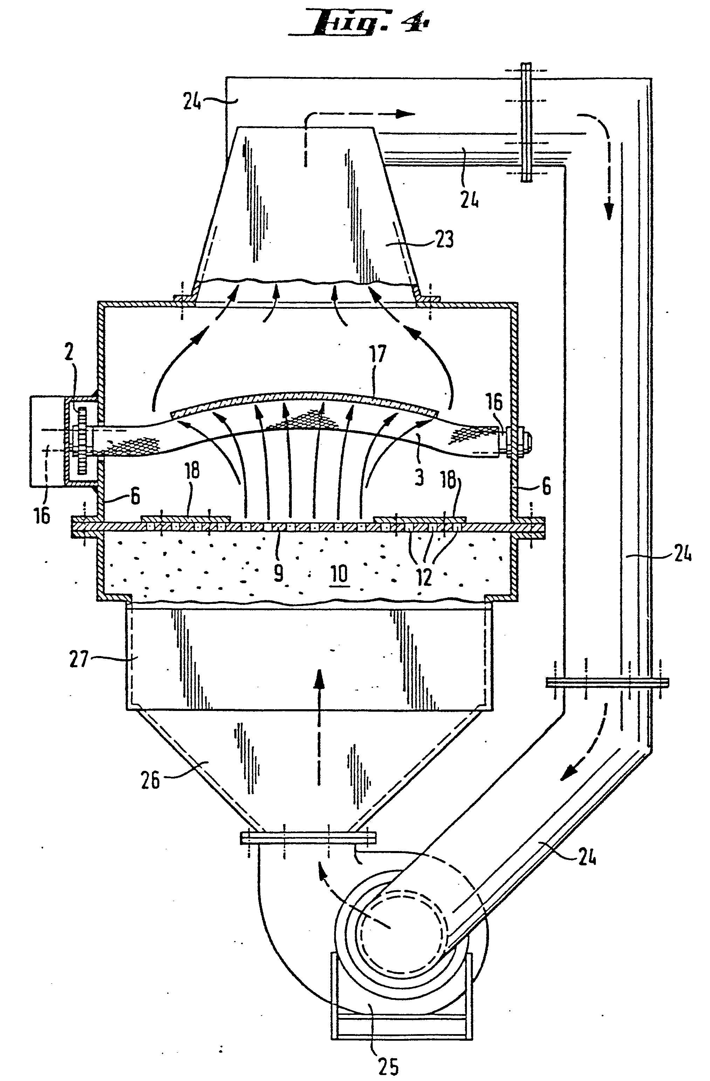

La figure 4 montre comment les gaz chauds circulent en circuit fermé à travers le four. On voit qu'aspirés vers le haut, hors de l'enceinte du four, par la hotte 23, ils sont conduits à travers la gaine 24 vers une soufflante 25 qui les renvoie dans la chambre 10 à travers des répartiteurs 26 et une chambre de réchauffage 27, équipée de dispositifs de chauffage aptes à réchauffer l'air à une température de l'ordre de 650 °C.

## Revendications

1. Procédé pour le transport de volumes de verre (1; 17) en position horizontale, sur des rouleaux (4) tournants échelonnés à travers un four de réchauffage dans lequel ces volumes sont portés à leur température de déformation, tandis qu'un courant gazeux à haute température est dirigé sur leurs faces inférieures, de façon à équilibrer une partie de leurs poids, caractérisé en ce que ce courant gazeux possède, dans leur direction, une vitesse d'écoulement qui varie continuement sur la largeur.

2. Procédé selon la revendication 1, caractérisé en ce que le débit d'émission moyen de ce courant gazeux par unité de surface varie sur la largeur de sorte que la pression qui s'exerce sous la feuille de verre (1; 17) varie continuement.

3. Procédé selon la revendication 2, caractérisé en ce que le débit d'émission du courant gazeux est réglé par zones.

4. Procédé selon l'une des revendications 2 et 3, caractérisé en ce que les débits d'émission des divers filets gazeux sont réglés de façon à créer sur la largeur de la feuille de verre (1; 17) un écart de pression compris entre 20 et 300 Pa.

5. Procédé selon l'une des revendications 1 à 4 caractérisé en ce que le four de réchauffage est un four de bombage à rouleaux.

6. Procédé selon la revendication 5, caractérisé en ce que le débit d'émission du courant gazeux est réglé à une valeur plus faible en regard des parties les plus basses des rouleaux (4) de transport.

7. Procédé selon la revendication 6, caractérisé en ce que des courants gazeux auxiliaires sont dirigés du haut vers les régions de la feuille qui, lors du bombage, s'affaissent par rapport aux autres.

8. Procédé selon l'une des revendications 6 ou 7, caractérisé en ce que le débit d'émission des filets gazeux varie dans la direction de transport des volumes (1; 17).

9. Dispositif pour la mise en oeuvre du procédé selon l'une des revendications 1 à 7, constitué d'un four tunnel équipé d'un convoyeur à rouleaux (4), d'une chambre (10) disposée sous le convoyeur et émettrice de gaz chauds sous pression, d'une hotte (23) d'extraction des gaz placée au-dessus du convoyeur et d'organes (24, 25) de recirculation de ces gaz en circuit fermé, caractérisé en ce que la chambre (10) est fermée à sa partie supérieure par une platine perforée (9), pourvue de moyens de régler l'émission du courant gazeux dans des plages déterminées de sa surface par l'intermédiaire du nombre, de la section, de la disposition et/ou du degré de fermeture des trous (12).

10. Dispositif selon la revendication 9, caractérisé en ce que la platine supérieure perforée (9) de la chambre sous pression (10) est disposée à une distance de 5 à 20 cm sous la portée des rouleaux (4).

11. Dispositif selon l'une des revendications 9 ou 10, caractérisé en ce que des conduites (20) reliées à la chambre sous pression (10) débouchent au-dessus du convoyeur, leurs buses de sortie (21) dirigeant des gaz sur des régions choisies des feuilles de verre (1; 17).

## Patentansprüche

1. Verfahren zum Transportieren von Glasscheiben (1; 17) in horizontaler Lage auf mit Abstand voneinander angeordneten sich drehenden Rollen (4) durch einen Erwärmungsofen, in dem die Glasscheiben auf Verformungstemperatur erwärmt werden, während ein heißer Gasstrom gegen ihre unteren Seiten gerichtet wird, um einen Teil ihres Eigengewichts auszugleichen, dadurch gekennzeichnet, daß der Gasstrom in Richtung der Glasscheiben eine sich über die Breite stetig ändernde Strömungsgeschwindigkeit aufweist.

2. Verfahren nach Anspruch 1, dadurch gekennzeichnet. daß die mittlere Strömungsmenge des Gasstromes je Flächeneinheit über die Breite derart unterschiedlich ist, daß der unterhalb der Glasscheibe (1; 17) wirkende Druck sich stetig ändert.

3. Verfahren nach Anspruch 2. dadurch gekennzeichnet, daß die Strömungsmenge des Gasstromes zonenweise geregelt wird.

4. Verfahren nach Anspruch 2 oder 3, dadurch gekennzeichnet, daß die Strömungsmengen der verschiedenen Teilströme des Gasstromes derart geregelt werden, daß sich über die Breite der Glasscheibe (1; 17) eine Druckdifferenz von 20 bis 300 Pa ergibt.

5. Verfahren nach einem der Ansprüche 1 bis 4, dadurch gekennzeichnet, daß der Erwärmungsofen ein Rollen-Biegeofen ist.

6. Verfahren nach Anspruch 5, dadurch gekennzeichnet, daß die Strömungsmenge des Gasstromes unterhalb der am tiefsten liegenden Teile der Transportrollen (4) auf einen niedrigeren Wert eingestellt wird.

7. Verfahren nach Anspruch 6, dadurch gekennzeichnet, daß Hilfsgasströme von oben auf die sich beim Biegen im Verhältnis zu den anderen Bereichen absenkenden Bereiche der Glasscheibe gerichtet werden.

8. Verfahren nach Anspruch 6 oder 7, dadurch gekennzeichnet, daß die Strömungsmenge der Teil-Gasströme in der Transportrichtung der Glasscheiben (1; 17) unterschiedlich ist.

9. Vorrichtung zur Durchführung des Verfahrens nach einem der Ansprüche 1 bis 7, aus einem Durchlaufofen mit einem Rollenförderer (4), einer heißes Gas unter Druck liefernden Kammer (10) unterhalb des Förderers, einer oberhalb des Förderers angeordneten Abzughaube (23) zum Absaugen des Gases und mit Mitteln (24, 25) für die Rückführung des heißen Gases in einem geschlossenen Kreislauf, dadurch gekennzeichnet, daß die Kammer (10) in ihrem oberen Teil durch eine Lochplatte (9) Geschlossen ist, die mit Mitteln zum Regeln der Strömungsmenge des Gasstroms in bestimmten Bereichen ihrer Oberfläche mit Hilfe der Anzahl, des Querschnitts, der Verteilung und/oder des Schließgrades der Löcher (12) versehen ist.

10. Vorrichtung nach Anspruch 9, dadurch gekennzeichnet, daß die obere Lochplatte (9) der unter Druck stehenden Kammer (10) in einem Abstand von 5 bis 20 cm unterhalb der Tragfläche der Rollen (4) angeordnet ist.

11. Vorrichtung nach Anspruch 9 oder 10, dadurch gekennzeichnet, daß mit der unter Druck stehenden Kammer (10) verbundene Rohre (20) oberhalb des Förderers münden, deren Auslaßdüsen (21) Gas gegen ausgewählte Bereiche der Glasscheiben (1; 17) richten.

## Claims

1. A method of transporting glass volumes (1; 17) in the horizontal-position over a series of rotatable rollers (4) through a heating furnace in which the volumes are brought to a temperature for deformation, and a current of gas at high temperature is directed on to their lower surfaces to support at least part of their weight, characterised in that the current of gas has, in its direction, a speed of flow which varies continuously over the width.

2. A method according to claim 1, characterised in that the average rate of flow of the gas current per unit surface area varies over the width such that the pressure which it exerts below the glass sheet (1; 17) varies continuously.

3. A method according to claim 2, characterised in that the rate of flow of the gas current is regulated by zones.

4. A method according to claim 2 or 3, characterised in that the flow rates of different gas streams are regulated so as to create over the width of the glass sheet (1; 17) a pressure difference from 20 to 300 Pa.

5. A method according to any one of claims 1 to 4, characterised in that the heating furnace is a furnace for curving on rollers.

6. A method according to claim 5, characterised in that the flow rate of the gas current is regulated at a lower value facing the lowest parts of the transport rollers (4).

7. A method according to claim 6, characterised in that auxiliary gas currents are directed from above towards the regions of the sheet which, during curving, sinks relatively to the others.

8. A method according to claim 6 or 7, characterised in that the flow rate of the gas streams varies in the direction of transport of the volumes (1; 17).

9. Device for carrying out a method according to any one of claims 1 to 7, comprising a tunnel furnace provided with a roller conveyor (4), a chamber (10) arranged below the conveyor and emitting hot gas under pressure, a hood (23) for gas extraction above the conveyor and members (24,25) for recirculating this gas in closed circuit, characterised in that the chamber (10) is closed at its upper part by a perforate plate (9), provided with means for regulating the emission of the gas current at given parts of its surface by adjusting the number, crosssection, arrangement and/or the degree of closing of the holes (12).

10. Device according to claim 9, characterised in that the upper perforate plate (9) of the chamber under pressure (10) is arranged at a distance from 5 to 20 cm under the support surface of the rollers (4).

11. Device according to claim 9 or 10, characterised in that ducts (20) connected to the chamber under pressure (10) open above the conveyor, their outlet nozzles (21) directing gas on to selected areas of the glass sheets (1; 17).

0 107 566

Fig. 1a

Fig. 1

Fig. 2a

Fig. 2

# Fig.3

# Fig. 4.